# FASCICULE DE BREVET EUROPEEN

(11) **EP 1 468 478 B1**
(45) Date de publication et mention de la délivrance du brevet: **26.10.2005**
(21) Numéro de dépôt: 03712269.4
(22) Date de dépôt: 20.01.2003
(51) Int. Cl.: H02G 3/32

(54) **DISPOSITIF DE POSE ET DE FIXATION POUR CANALISATION DES CIRCUITS DIVERS, DOMESTIQUES OU INDUSTRIELS**
VORRICHTUNG ZUM VERLEGEN UND FIXIEREN VON KANALEN FUR VERSCHIEDENEN HAUSHALT- ODER INDUSTRIEKREISEN
DEVICE FOR LAYING AND FIXING PIPES FOR VARIOUS CIRCUITS, DOMESTIC OR INDUSTRIAL

(30) Priorité: 22.01.2002 FR 0200845
(43) Date de publication de la demande: 20.10.2004
(73) Titulaire: Cacciani, Fabien, 69600 Oullins (FR); Hoffmann, Michel, 69380 Chasselay (FR)
(72) Inventeur: Cacciani, Fabien, 69600 Oullins (FR); Hoffmann, Michel, 69380 Chasselay (FR)
(74) Mandataire: Delorme, Nicolas
(86) Numéro de dépôt international: PCT/FR2003/000176
(87) Numéro de publication internationale: WO 2003/063316

(56) Documents cités:
- WO-A-93/14545
- DE-U- 20 102 174
- US-A- 4 534 147

## Description

L'invention concerne un dispositif de pose et de fixation pour canalisation de circuits divers, domestiques ou industriels.

Elle concerne donc les canalisations de chauffage, d'adduction d'eau chaude et froide, et de tous autres circuits fluidiques, de même que celles de protection des circuits électriques ou de transmission de signaux. Lors de la construction d'un réseau de canalisations, il est nécessaire de préformer sur le chantier chaque canalisation et de la prépositionner avant de la fixer définitivement, puis de répéter ces opérations pour chaque canalisation ou conduit.

Cette préparation est fastidieuse pour les canalisations métalliques ou en matière plastique qui sont coudées à la demande, mais aussi pour les canalisations formées par des tronçons rectilignes raccordés par des raccords en forme de T ou de C fixés par soudage, brasage ou collage.

Par les documents FR 1319291, FR 2568730 et BE 571724 on connaît des moulures ou supports de pose formés par un profilé continu comprenant une semelle de fixation avec un dos plat recouvert par une couche adhésive et au moins deux ailes flexibles en vis-à-vis délimitant un C fermé, ces ailes pouvant être écartées élastiquement pour permettre l'introduction d'un ou plusieurs conducteurs dans la cavité qu'elles forment. Dans le document FR 2568730 le profilé peut comporter plusieurs cavités de réception juxtaposées et séparables à la pose, tandis que dans le document BE 571724 le support de pose comprend une ou deux cavités juxtaposées et inséparables formées par des ailes en C, c'est-à-dire ayant des bords espacés.

Par leur forme et leur structure ces supports de pose pour conducteurs électriques sont inadaptés à la pose de canalisations, plus rigides, plus lourdes et de plus grandes dimensions transversales que les conducteurs et, en particulier, ne pourraient pas, par la seule force de l'adhésif, assurer une fixation permanente d'une ou de plusieurs canalisations ayant une plus grande masse par unité de longueur. De plus, pour les canalisations apparentes, ces supports formeraient un ensemble inesthétique nécessitant des moyens complémentaires pour être caché.

La présente invention a pour objet, en partant des supports de pose pour conducteurs électriques de fournir un support de pose et de fixation pour canalisations simplifiant la mise en place de celles-ci, tout en réduisant la durée et le coût de la pose et en supprimant toute opération de finition pour les canalisations restant apparentes.

L'invention concerne donc un support de pose comprenant un profilé en matière plastique avec une semelle dont le verso est équipé d'un moyen de fixation adhésif contre une paroi et dont le recto est muni d'ailes déformables élastiquement et définissant deux à deux une cavité longitudinale apte à recevoir et maintenir un corps longiforme.

Selon l'invention, les ailes déformables sont celles de gouttières longitudinales, de section transversale en C ouvert, disposées en saillie du recto de la semelle et espacées transversalement les unes des autres par un intervalle E, au moins l'une des ailes de chaque gouttière étant monolithique avec la semelle et réalisée dans la même matière semi rigide, tandis que, d'une part, la dite semelle du profilé est divisée en tronçons par des lignes transversales, sécables ou de pré découpage, coïncidant avec des fentes transversales ménagées dans les gouttières, pour former dans ce profilé des supports de pose indépendants, et que, d'autre part, le dispositif comprend également un profilé de finition en matière plastique qui, muni de moyens de fixation par encliquetage sur les gouttières ou canalisations, est découpable en longueur pour couvrir un ou plusieurs support de pose et les canalisations associées, sur une partie rectiligne de canalisations posées et fixées.

Ainsi, lorsque les canalisations ont été mises en forme, c'est-à-dire coudées et conformées ou découpées en tronçons rectilignes, leur positionnement s'effectue en clippant sur elles des tronçons de support de pose et en plaquant le verso de ces tronçons, préalablement débarrassés de leur pellicule pelable, contre la paroi sur laquelle ils pourront ultérieurement être fixés par d'autres moyens mécaniques, tels que vis ou équivalent. Quand toutes les canalisations sont posées et fixées et qu'il est nécessaire de les cacher, le profilé de finition est découpé en tronçons rectilignes, par des coupes droites ou biaises, et est fixé par clippage sur l'installation. Ainsi, un unique tronçon de finition cache à la vue un ou plusieurs supports de pose et les canalisations que ceux ci maintiennent.

Grâce à cela l'ensemble des opérations de pose s'effectue plus rapidement qu'avec la méthode traditionnelle et procure des installations plus finies et plus esthétiques.

Dans une forme d'exécution, au moins une gouttière longitudinale, de plus petite dimension diamétrale intérieure que celle des gouttières pour canalisation, fait saillie de la semelle, dans l'intervalle E entre deux gouttières pour canalisation, pour accueillir et maintenir un conducteur isolé d'un circuit de transmission de signaux électriques ou optiques.

Dans une autre forme d'exécution, le profilé de finition comporte, en saillie de son verso, des gouttières longitudinales, de section transversale en C ouvert, aptes chacune à recevoir et à maintenir un conducteur isolé, pour la transmission de signaux électriques ou optiques, s'insérant dans l'intervalle E entre les gouttières pour canalisations du support.

Chacun de ces deux aménagements permet d'utiliser les supports de pose des canalisations ou le profilé de finition pour la pose et le maintien de conducteurs divers. Cela est particulièrement intéressant pour les circuits électriques ou optiques rapportés bien après mise en place des canalisations, car cela évite de réaliser des saignées dans les murs, ou d'utiliser d'autres artifices, pour cacher ces conducteurs dans une pièce à vivre, équipée par exemple de canalisations placées en plinthe ou corniche et cachées par un profilé de finition.

D'autres avantages ressortiront de la description qui suit en référence au dessin schématique annexé représentant, à titre d'exemples, plusieurs formes d'exécution du support de pose selon l'invention.
Figure 1 est une vue en perspective d'une première forme d'exécution du dispositif selon l'invention conçu pour deux canalisations,
Figure 2 est une vue de côté en coupe transversale d'une autre forme d'exécution du support de pose, lorsqu'il est mis en place contre une paroi,
Figure 3 est une vue de face en élévation montrant l'application du dispositif au positionnement des deux canalisations d'adduction d'eau chaude et d'eau froide vers un lavabo,
Figure 4 est une vue de face en bout d'une autre forme d'exécution du dispositif,
Figures 5 et 6 sont des vues partielles de coté d'une gouttière pour canalisation montrant deux formes d'exécution des fourrures pouvant coopérer avec elle,
Figure 7 est une vue partielle en coupe d'une autre forme d'exécution de la gouttière pour canalisation,
Figure 8 est une vue partielle en coupe d'une autre forme d'exécution de la gouttière pour canalisation,
Figures 9 à 12 sont des vues de coté en coupe d'autres formes d'exécution du dispositif,
Figure 13 est une vue partielle en perspective d'un local équipé du dispositif posé en plinthe et contournant une porte,
Figures 14 à 18 montrent d'autres formes d'exécution du dispositif.

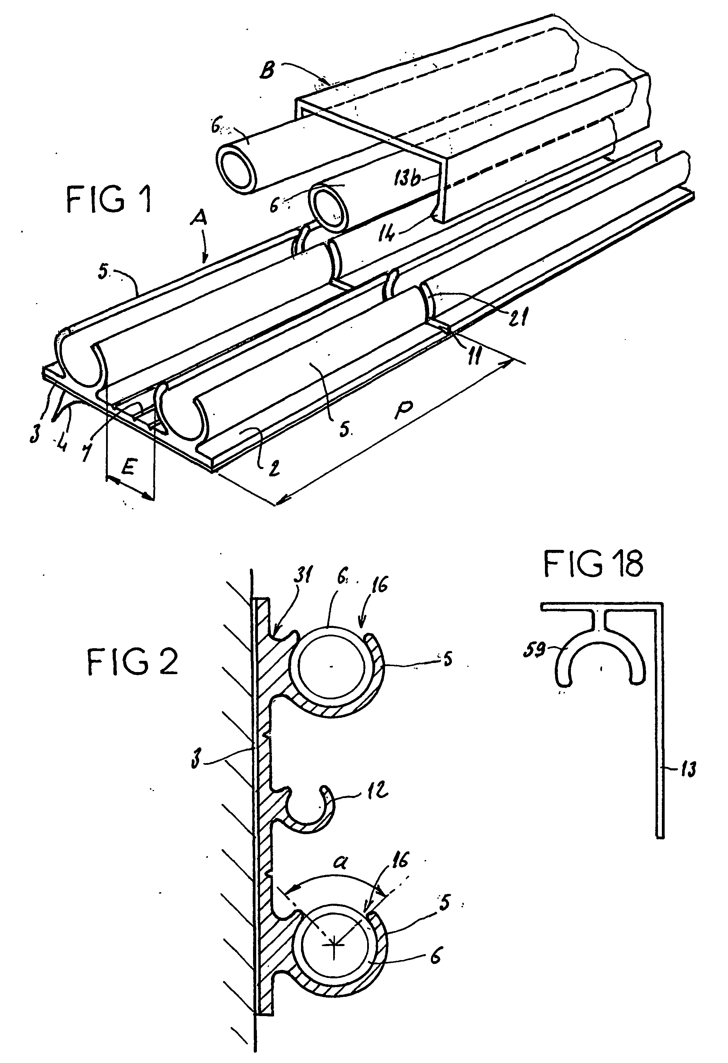

A la figure 1 la référence A désigne un profilé en matière plastique semi rigide comprenant une semelle 2 munie, sur son verso, d'une couche adhésive 3 protégée par une pellicule pelable 4. Du recto de la semelle 2 font saillies deux gouttières 5, de section transversale en "C" ouvert et dont la dimension intérieure est adaptée aux canalisations 6 avec lesquelles ces gouttières doivent coopérer. Les deux gouttières sont séparées par un espace E, au moins égal à l'écartement habituel des canalisations du réseau considéré.

Dans cet espace, la semelle 2 comporte une ou plusieurs lignes longitudinales sécables 7 constituées par une réduction de l'épaisseur de sa matière constitutive, et/ou par des prédécoupes non représentées. Elle comporte aussi des lignes transversales sécables 11 qui, formées aussi par un amincissement de matière ou par une prédécoupe, coïncident avec des fentes 21 ménagées dans les gouttières 5 et allant jusqu'à la semelle 3. En pratique le pas de répartition P des lignes sécables 11 et des fentes 21 est de l'ordre de 10 centimètres.

Au profilé A est associé un profilé de finition B qui, en matière plastique semi rigide ou souple, est destiné à former un chapeau cachant les supports et canalisations.

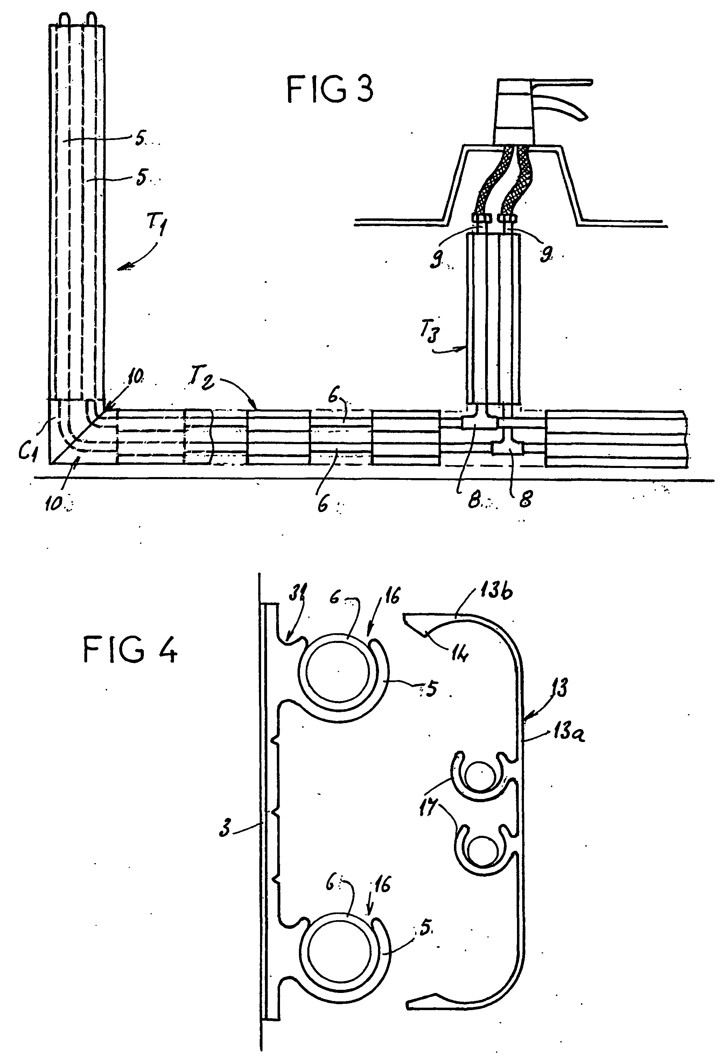

Lors de la construction d'un réseau d'adduction d'eau froide et d'eau chaude à deux canalisations, comme montré figure 3, au fur et à mesure que l'installateur conforme les canalisations 6, par exemple en les coudant en 10 et en les sectionnant en longueur, il les prépositionne sur la paroi allant servir à leur fixation. Dès que tous les constituants d'un tronçon de réseau conviennent ils sont positionnés sur la paroi en utilisant, soit une longueur du profilé de pose, comme montré en T1 et T3 à la figure 3, cette longueur étant un multiple du pas de répartition P entre deux lignes sécables 11 du profilé A, soit des supports indépendants T2, obtenus par découpage de tronçons du profilé de base A. Chaque élément T1, T2 ou T3 est d'abord mis en place sur les canalisations 6 par clippage de ses gouttières 5 sur celles-ci, c'est-à-dire en forçant leurs ailes à s'écarter pour passer le plan diamétral de la canalisation avant de revenir élastiquement à leur position d'origine. Après enlèvement des pellicules 4 du verso de chacun des éléments T1 et T2, ceux-ci sont collés contre la paroi.

La couche adhésive 3 assure un maintien de positionnement suffisant pour retenir les tronçons de canalisation pendant que l'installateur poursuit la mise en place du reste de l'installation et, par exemple, met en place les tés 8 de la dérivation du réseau, dérivation composée par deux tronçons de canalisation 9 coopérant, par exemple, avec une longueur T3 du profilé support.

Si besoin est, par exemple si les deux canalisations doivent décrire des chemins différents, le profilé A du support de pose est divisé longitudinalement en deux éléments indépendants par séparation le long de l'une de ses lignes longitudinales sécables 7.

Lorsque tout ou partie de l'installation est positionnée, il est procédé à la fixation définitive des canalisations par la pose d'agrafes, de colliers, de vis ou de tout autre moyen connu de l'installateur. A ce stade, il est procédé au découpage dans le profilé B de tronçons de chapeau C1 C2 et C3 ayant des longueurs leur permettant de couvrir une section rectiligne du réseau de canalisations posées, c'est à dire les supports T1 , T2 et T3 et les canalisations qui en débordent.

Grâce, au profilé B l'ensemble de l'installation est entièrement cachée à la vue et forme un ensemble ne déparant pas le local dans lequel elle est disposée, et permettant même de la faire cheminer contre les parois, en plinthe, en corniche, avec éventuellement contournement des huisseries.

La forme d'exécution représentée à la figure 2 diffère de la précédente par le fait que chacune des deux gouttières 5a est toujours en forme de "C" mais a une ouverture 16 qui débouche, non pas à l'opposé de la semelle 2, mais sur un côté. Cette figure montre également que l'angle au centre a de l'ouverture 16 s'étend sur une valeur d'au moins 90° pouvant aller jusqu'à 170 ° en fonction des caractéristiques de déformation de la matière constituant le support, afin que les canalisations cylindriques 6 soient retenues par encliquetage dans chaque gouttière.

Cette figure 2 montre également que, dans l'intervalle entre les deux gouttières 5a, peut être aménagée une gouttière 12 de plus petite dimension diamétrale et pouvant être utilisée pour le positionnement de conducteurs isolés, de transmission de courant basse tension ou de signaux électriques ou optiques.

Dans la forme d'exécution représentée à la figure 4, le support de pose équipé de deux gouttières 5a coopère avec un profilé de finition 13 formant chapeau. Il présente une section transversale en "U" dont les ailes 13b sont munies de moyens d'encliquetage, et par exemple de crans 14 aptes à s'engager élastiquement dans des rainures 31 ménagées au pied de chaque gouttière. L'âme 13a du chapeau comporte, comme montré à la figure 4, deux gouttières 17 saillant de son verso et s'insérant dans l'intervalle E entre les gouttières 5a pour les canalisations. Ces gouttières 17 sont également destinées à recevoir des conducteurs isolés pour la transmission de courant basse tension ou pour la transmission de signaux électriques ou optiques.

Il est évident que le nombre de gouttières 5 pour canalisations portées par un même support peut être différent de deux, et par exemple être de 1, 3 ou 4, en fonction des applications.

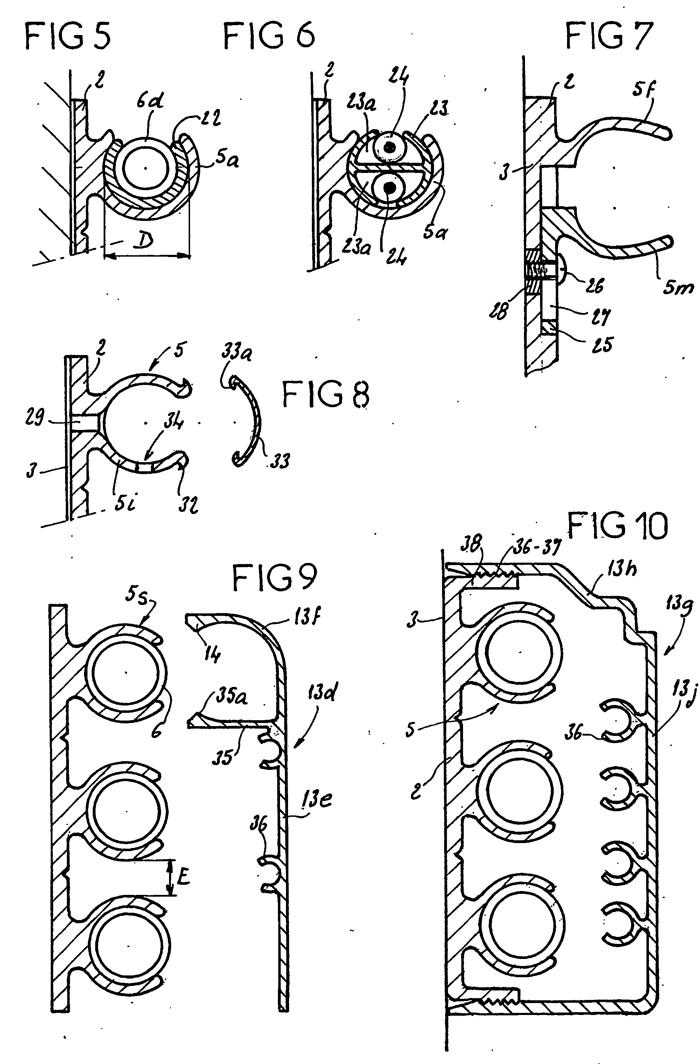

De même, le diamètre intérieur D de chaque gouttière 5 ou 5a varie en fonction des applications à savoir : sanitaire chauffage, transport de fluides industriels. Toutefois, pour les applications courantes, le diamètre intérieur D, à la figure 5, est celui du plus grand diamètre extérieur de canalisation 6 rencontrée, et par exemple 18 millimètres pour un tuyau sanitaire. Dans ce cas et pour le maintien des canalisations 6d de plus petit diamètre extérieur, des fourrures 22, en forme de C ouvert, sont mises en place dans les gouttières comme monté figure 5. Ces fourrures sont en matière plastique souple pour ne pas ajouter leur raideur à celle des ailes des gouttières. Elles présentent une dimension extérieure leur permettant de se clipper dans les gouttières et un diamètre intérieur correspondant à celui extérieur des tuyaux normalisés, par exemple 16, 12 ou 10 mm.

A la figure 6 la fourrure 23 est en forme de H, c'est-à-dire est composée d'une barre centrale rectiligne reliant deux barrettes curvilignes. Elle délimite deux logements 23a aptes, chacun, à recevoir et maintenir un conducteur isolé 24. Ce type de fourrure permet d'utiliser pour le passage de conducteurs divers la ou les gouttières pour canalisations laissées vacantes.

La fourrure 20 pourrait présenter quatre logements grâce à une seconde barre rectiligne perpendiculaire à la première barre rectiligne perpendiculaire à la première.

La figure 7 montre que chacune des gouttières pour canalisation, qui jusqu'alors comportait deux ailes monolithiques avec la semelle 2, peut ne comporter qu'une aile monolithique avec cette semelle, par exemple celle 5f, et présenter une aile 5m solidaire d'une patte 25. Celle ci est montée coulissante par rapport à la semelle 2 pour former, entre les ailes 5f et 5m, un logement oblong apte à accueillir une canalisation ayant cette section ou une canalisation de plus gros diamètre. La patte 25 est calée par une vis 26 qui, traversant une lumière oblongue 27, se visse dans un écrou 28 noyé dans la semelle 2.

Bien que ce ne soit pas représenté sur le dessin, il est envisagé que chaque aile de la gouttière 5 soit montée coulissante par rapport à la semelle 2. Ceci permet de régler l'inclinaison de la canalisation et permet de donner une pente à une canalisation d'évacuation.

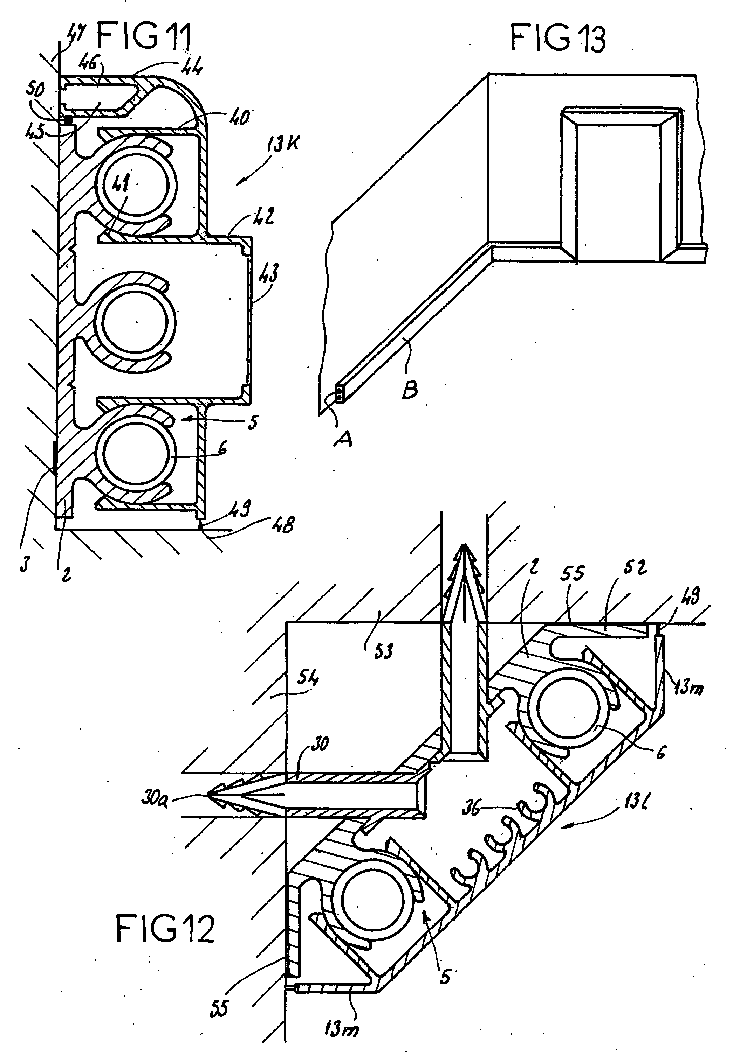

Il est précisé que la semelle 2 peut également être renforcée par une plaque rigide noyée dans sa matière ou contenir tout insert permettant sa fixation définitive tels que des chevilles. Comme montré à la figure 8, la semelle 2 peut aussi être traversée par des trous 29 permettant le passage de vis, de cheminée ou de cheville 30, montrée figure12.

Dans la forme d'exécution de figure 8, le bord longitudinal de chacune des ailes de chacune des gouttières 5 d'un support est muni d'un cran 32, ergot ou équivalent, destiné à coopérer avec le cran 33a, ou ergot complémentaire, ménagé à chacune des extrémité d'un clips 33. Ce dernier est mis en place sur la gouttière après que celle ci ait reçu une canalisation dont le diamètre extérieur est plus grand que celui pour lequel elle est prévue et qui, de ce fait risquerait de s'échapper hors d'elle sous l'effort élastique de ses ailes.

Cette figure montre également que pour éviter tout rétention de condensas, au moins l'une des ailes 5i de chaque gouttière 5 est traversée par des trous 34, espacés longitudinalement avec un pas régulier, sous multiple de celui de répartition P des lignes sécables 11 dans le profilé.

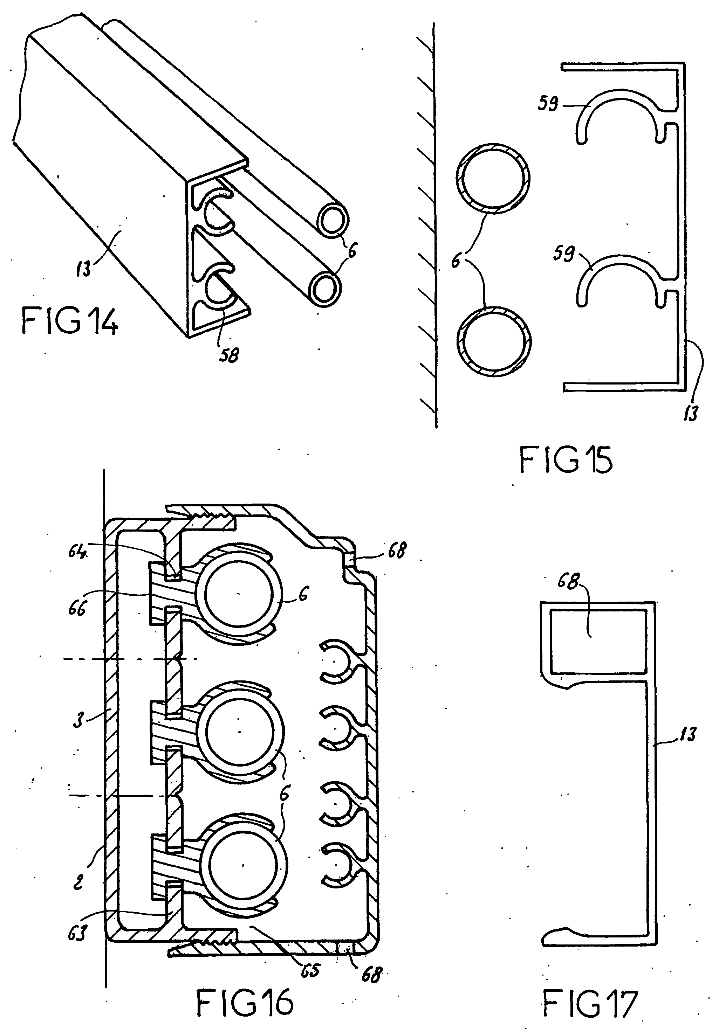

A la figure 9, le profilé de finition 13d est en forme de L et comprend donc une âme 13e et une aile 13f. Celle ci est munie d'un cran 14 de retenu sur l'aile extérieure de la gouttière supérieure 5s des supports de pose. Le profilé de finition 13d est également solidaire d'une nervure 35 saillant de l'âme 13e et dont l'un des bords est muni d'un cran 35a apte à coopérer avec l'autre aile de la gouttière 5s, pour participer à la fixation du profilé 13d sur chacun des supports de pose. De plus, de l'âme 13e du profilé, font saillies une ou plusieurs gouttières 36 pour conducteur, gouttières s'insérant dans les intervallles F entre gouttières 5 pour canalisation. Lorsque le profilé 13d est posé sur une succession de supports de pose, l'ensemble à la forme générale d'une plinthe et peut être disposé en bas de parois murales, comme montré figure 13.

A la figure 10, le profilé de finition 13g est en forme de U et ses deux ailes sont munies de crantage intérieurs 36 aptes à s'encliqueter sur des crantages complémentaires 37 formés sur des nervures 38 bordant le profilé A et chaque support de pose T, détaché de ce profilé. Au moins une partie de ce profilé 13g est conformée en moulure 13h. Son âme 13j qui est plus espacée transversalement des gouttières 5 pour canalisation, porte, en saillie de sa face interne, plusieurs gouttières 36 pour conducteurs.

Cet aménagement permet, après installation du réseau de canalisations et au fur et à mesure de l'équipement d'un foyer, d'utiliser le circuit décrit par l'installation pour faire cheminer les conducteurs électriques se rajoutant, tels que câble de téléphone, câble d'ordinateur, fils pour haut parleur, liaison ordinateur-téléviseur..., et cela sans avoir à procéder à d'autres opérations que de retirer et de remettre le profilé de finition 13g sur les tronçons de support de pose.

Dans la variante de figure 11, le profilé 13k comporte, en saillie de son âme, des nervures intérieures 40 munies de crans extrêmes 41, se faisant vis-à-vis et aptes à être clippées sur une gouttière 5 ou 5a pour canalisation. Dans l'intervalle entre les nervures 40, l'âme déborde vers l'extérieur pour former une goulotte 42. Dans celle-ci l'âme comporte, localement et avec un pas de répétition régulier, des zones 43 où sa paroi a une moindre épaisseur et peut être découpée ou cassée pour mettre en place un accessoire électrique, tel que interrupteur, prise, ... L'aile 44 du profilé de finition 13k est doublée par une cloison longitudinale 45 avec laquelle elle forme un canal ouvert 46, pouvant recevoir un ou plusieurs conducteurs isolés pour la transmission de signaux, électriques ou optiques. Enfin, les parties du profilé destinées à venir en contact avec une paroi, tel que mur 47 ou sol 48, sont équipées de moyens d'étanchéité, au moins à la poussière, tels que joint à lèvre 49 , joint compressible 50.

La figure 12 montre une forme d'exécution adaptée à la pose en corniche. La semelle 2 du profilé de pose est bordée par deux bavettes latérales 52 de fixation temporaire contre les parois perpendiculaires d'un angle entre deux parois 53, 54 et chacune de ces bavettes comporte, sur son verso, une couche adhésive 55 protégées par une pellicule pelable. La semelle est traversée par des trous 56 pour le passage de cheminées épaulées 30, dont l'extrémité est conformée en cheville d'ancrage 30a. Les ailes 13m du profilé de finition 13l sont conformées pour cacher les bavettes 52 et former une corniche esthétique. Elles peuvent, comme l'âme du profilé, prendre la forme de toute moulure habituelle pour améliorer l'effet décoratif, être colorées ou translucide.

De même, les gouttières pour conducteurs peuvent recevoir des guirlandes lumineuses, à lumière fixe ou clignotante, visibles à travers la matière du profilé de finition.

La figure 16 illustre une autre forme d'exécution avantageuse dans laquelle une cloison 63, parallèle à la semelle 2, est adjointe au profilé A. Cette cloison 63 est percée de trous oblongs 64 dans lesquels sont engagées des organes de fixation de canalisation 6. Ces organes comprennent un clip élastique et un pied 66 en T qui s'engage dans l'un des trous oblongs 64 et après un quart de tour est retenu dans ce dernier. On note également la présence d'ouvertures de ventilation 68.

Quelle que soit sa forme de réalisation, le support de pose selon l'invention évite à l'installateur d'avoir à préparer le positionnement de canalisations et conduits divers, et en particulier, d'avoir à fixer des chevilles, des pattes à vis ou des colliers, au fur et à mesure qu'il met en forme des canalisations, et permet donc de gagner un temps de pose important.

Un autre avantage est que la mise en oeuvre du support de pose ne nécessite pas de compétence particulière, ni d'outillage particulier, puisqu'il suffit d'une massette pour faire adhérer son adhésif contre la paroi et d'un organe coupant de type cutter, pour le sectionner en tronçons longitudinaux ou en éléments indépendants.

Dans les formes d'exécution plus élaborées, comportant des moyens de maintien de conducteurs et des profils de finition moulurés, le dispositif selon l'invention peut être posé en applique et suivre l'encadrement des huisseries ou non. En outre, il est envisagé d'utiliser le profilé de finition 13 équipé de clips 58 à ailes déformable élastiquement directement sur des canalisation 6 pour masquer ces dernières. La figure 15 montre une autre variante dans laquelle le profilé de finition 13 présente des clips 59 tournés vers le bas, ce qui permet de fixer le profilé en venant par le haut. Le profilé pourrait cependant ne comprendre qu'un seul clip 59 comme représenté à la figure 18.

La figure 17 montre un profilé 13 dans lequel une réservation 68 est prévue pour faire passer, par exemple, des câbles. On peut bien entendu réaliser l'invention dans toute matière appropriée. Il peut être envisagé de réaliser le profilé de finition 13 en bois sur lequel sont rapportés des éléments de clippage.

Il peut également être envisagé de placer une couche de matériau isolant dans le dispositif pour réaliser l'isolation des canalisations 6.

En outre, le dispositif peut être discrètement clippé sur une canalisation 6 ou peut être clippé sur le collier maintenant cette canalisation.

## Revendications

1. Dispositif de pose et de fixation pour canalisations de circuits divers, comprenant un profilé A en matière plastique avec une semelle (2) dont le verso est équipé d'un moyen de fixation adhésif (3) contre une paroi et dont le recto est muni d'ailes déformables élastiquement et définissant deux à deux une cavité longitudinale (5) apte à recevoir et maintenir un corps longiforme **caractérisé en ce que** les ailes déformables sont celles de gouttières longitudinales (5, 5a), de section transversale en C ouvert, disposées en saillie du recto de la semelle (2) et espacées transversalement les unes des autres par un intervalle E, au moins l'une des ailes de chaque gouttière (5, 5a) étant monolithique avec la semelle (2) et réalisée dans la même matière semi rigide, tandis que, d'une part, la dite semelle (2) du profilé est divisée en tronçons par des lignes transversales (11), sécables ou de pré découpage, coïncidant avec des fentes transversales (21) ménagées dans les gouttières (5, 5a), pour former dans ce profilé A des supports de pose indépendants (T, T1, T2..), et que, d'autre part, le dispositif comprend également un profilé de finition en matière plastique B qui, muni de moyens 14 de fixation par encliquetage sur les gouttières (5, 5a), est découpable en longueur pour couvrir un ou plusieurs support de pose (T, T1, T2) et les canalisations (6) associées, sur une partie rectiligne de canalisations posées et fixées.

2. Dispositif de pose et de fixation selon la revendication 1, **caractérisé en ce que** les ouvertures (16) des gouttières (5a) du profilé A débouchent latéralement et en direction du même bord longitudinal de la semelle (2).

3. Dispositif de pose et de fixation selon la revendication 1, **caractérisé en ce qu'**il comprend des fourrures (23)en forme de C ouvert aptes chacune à être insérée dans l'une des gouttières (5, 5a) pour en réduire le diamètre intérieur d'accueil d'une canalisation (6).

4. Dispositif de pose et de fixation selon la revendication 1 **caractérisé en ce qu'**il comprend des fourrures (23) en forme de H aptes chacune à être insérée dans l'une des gouttières (5, 5a) pour en réduire le diamètre d'accueil et maintenir un corps longiforme de plus petite section transversale, tel qu'un conducteur isolé de transmission de signaux électriques ou optiques.

5. Dispositif de pose et de fixation selon la revendication 1 **caractérisé en ce qu'**au moins une gouttière longitudinale (12), de plus petite dimension diamétrale intérieure que celle des gouttières (5, 5a) pour canalisation, fait saillie de la semelle, dans l'intervalle (E) entre deux gouttières (5, 5a) pour canalisation, pour accueillir et maintenir un conducteur isolé d'un circuit de transmission de signaux électriques ou optiques.

6. Dispositif de pose et de fixation selon la revendication 1 **caractérisé en ce que** dans chaque gouttière (5, 5a) pour canalisation, l'aile (5m) qui n'est pas monolithique avec la semelle (2) est solidaire d'une patte (25) qui, parallèle à la semelle (2) et montée coulissante par rapport à elle, coopère avec des moyens (26,28) la bloquant sur la dite semelle, dans l'une quelconque de ses positions rapprochée ou éloignée de l'autre aile (5f).

7. Dispositif de pose et de fixation selon la revendication 6 **caractérisé en ce que** chaque aile de la gouttière (5) est montée coulissante par rapport à la semelle (2).

8. Dispositif de pose et de fixation selon la revendication 1 **caractérisé en ce que** les ailes de chacune des gouttières (5) sont munies, à leur extrémité, de crans (32), ergots ou équivalents, aptes à coopérer avec des ergots complémentaires (33a) ménagés aux extrémités de clips (33) de verrouillage du contenu de la gouttière.

9. Dispositif de pose et de fixation selon la revendication 1 **caractérisé en ce que** le profilé de finition (13) a une section transversale en U dont les ailes (13b) sont élastiquement déformables et sont munies de moyens (14) d'encliquetage sur les ailes extérieures des deux gouttières de bordure (5, 5a) d'un support de pose.

10. Dispositif de pose et de fixation selon la revendication 1 **caractérisé en ce que** le profilé de finition (13d) a une section transversale en L et comporte, en saillie de son âme (13e), une nervure longitudinale (35), élastiquement déformable et munie, comme son aile (13f), d'un cran d'encliquetage (35a) apte à coopérer avec l'une des ailes d'une gouttière (5s) pour canalisation, gouttière dont l'autre aile coopère avec le cran (14) de l'aile (13f) d u profilé (13d).

11. Dispositif de pose et de fixation selon la revendication 1 **caractérisé en ce que** le profilé de finition B comporte, en saillie de son verso, des gouttières longitudinales (36) de section transversales en C ouvert, aptes chacune à recevoir et maintenir un conducteur, pour la transmission de signaux électriques ou optiques, et s'insérant dans l'intervalle E entre les gouttières (5, 5a) pour canalisations.

12. Dispositif de pose et de fixation selon la revendication 1 **caractérisé en ce qu'**au moins l'une des ailes (44) du profilé de finition (13k) est doublée par une cloison longitudinale (45) avec laquelle elle forme un canal ouvert (46) de réception d'au moins un conducteur isolé, pour la transmission de signaux électriques ou optiques.

13. Dispositif de pose et de fixation selon la revendication 1 **caractérisé en ce que** le profilé de finition (13k) comporte dans son âme des zones qui, en réserve pour positionner ou fixer un organe électrique, tel qu'un interrupteur, sont obturées par des voiles de matière crevables (43).

14. Dispositif de pose et de fixation selon la revendication 1 **caractérisé en ce que** la semelle (2)de chaque support de pose (T, T1, T2) est traversée par des trous (29, 56) pour le passage de cheminées ou chevilles (30) coopérant avec des vis de fixation définitive.

15. Dispositif de pose et de fixation selon la revendication 1 **caractérisé en ce que** la semelle de fixation (2) de chaque support de pose (T, T1, T2) est bordée par deux bavettes latérales (52), de fixation temporaire contre les parois perpendiculaires d'un angle entre deux parois, et chacune de ces bavettes (52) comporte sur son verso une couche adhésive (55) protégée par une pellicule pelable.

16. Dispositif de pose et de fixation selon la revendication 1 **caractérisé en ce que** le profilé (A) présente une cloison (59) parallèle à la semelle (2) dans laquelle sont aménagés des moyens de retenue d'organe de fixation de canalisation (6).

17. Dispositif de pose et de fixation selon la revendication 16 **caractérisé en ce que** les organes de fixation (65) présentent chacun un pied (66) en T s'engageant dans un trou oblong ménagé dans la paroi (63).

## Patentansprüche

1. Vorrichtung zum Verlegen und Befestigen von Rohrleitungen verschiedener Kreisläufe, die ein Profilteil A aus Kunststoffmaterial mit einer Grundplatte (2) aufweist, deren Rückseite mit einem an einer Wand haftenden Befestigungsmittel (3) und deren Vorderseite mit elastisch verformbaren Flügeln versehen ist, die paarweise einen Längshohlraum (5) definieren, der einen länglichen Körper aufnehmen kann, **dadurch gekennzeichnet, dass** die verformbaren Flügel diejenigen von Längsrinnen (5, 5a) mit einem offenen C-förmigem Querschnitt sind, die auf der Vorderseite der Grundplatte (2) vorstehend angeordnet sind und in Querrichtung einen Abstand E zueinander haben, wobei mindestens einer der Flügel jeder Rinne (5, 5a) einstückig mit der Grundplatte (2) und aus dem gleichen halbsteifen Material hergestellt ist, während einerseits die Grundplatte (2) des Profilteils durch teilbare oder Vorschnitts-Querlinien (11), die mit in den Rinnen (5, 5a) ausgebildeten Querschlitzen (21) übereinstimmen, in Abschnitte aufgeteilt ist, um in diesem Profilteil A unabhängige Verlegehalterungen (T, T1, T2, ...) zu bilden, und andererseits die Vorrichtung ebenfalls ein Zusatzprofil B aus Kunststoffmaterial aufweist, das mit Mitteln (14) zur einrastenden Befestigung auf den Rinnen (5, 5a) versehen und in der Länge zerschneidbar ist, um eine oder mehrere Verlegehalterungen (T, T1, T2) und die zugeordneten Rohrleitungen (6) über einen geradlinigen Bereich von verlegten und befestigten Rohrleitungen zu verdecken.

2. Vorrichtung zum Verlegen und Befestigen nach Anspruch 1, **dadurch gekennzeichnet, dass** die Öffnungen (16) der Rinnen (5a) des Profilteils A seitlich und in Richtung des gleichen Längsrands der Grundplatte (2) münden.

3. Vorrichtung zum Verlegen und Befestigen nach Anspruch 1, **dadurch gekennzeichnet, dass** sie Einsätze (23) in Form eines offenen C aufweist, die in der Lage sind, in eine der Rinnen (5, 5a) eingefügt zu werden, um deren inneren Aufnahmedurchmesser für eine Rohrleitung (6) zu verringern.

4. Vorrichtung zum Verlegen und Befestigen nach Anspruch 1, **dadurch gekennzeichnet, dass** sie H-förmige Einsätze (23) aufweist, die in der Lage sind, in eine der Rinnen (5, 5a) eingefügt zu werden, um deren Aufnahmedurchmesser zu verringern und einen länglichen Körper mit kleinerem Querschnitt zu halten, wie zum Beispiel einen isolierten Übertragungsleiter von elektrischen oder optischen Signalen.

5. Vorrichtung zum Verlegen und Befestigen nach Anspruch 1, **dadurch gekennzeichnet, dass** mindestens eine Längsrinne (12) mit kleinerem Innendurchmesser als derjenige der Rinnen (5, 5a) für Rohrleitungen von der Grundplatte im Zwischenraum (E) zwischen zwei Rohrleitungsrinnen (5a, 5a) vorsteht, um einen isolierten Leiter einer Übertragungsschaltung von elektrischen oder optischen Signalen aufzunehmen und zu halten.

6. Vorrichtung zum Verlegen und Befestigen nach Anspruch 1, **dadurch gekennzeichnet, dass** in jeder Rohrleitungsrinne (5, 5a) der Flügel (5m), der nichl aus einem Stück mit der Grundplatte (2) geformt ist, fest mit einer Lasche (25) verbunden ist, die parallel zur Grundplatte (2) und zu dieser gleitend montiert ist und mit Mitteln (26, 28) zusammenwirkt, die ihn auf der Grundplatte in einer beliebigen seiner dem anderen Flügel (5f) angenäherten oder von ihm entfernten Positionen blockiert.

7. Vorrichtung zum Verlegen und Befestigen nach Anspruch 6, **dadurch gekennzeichnet, dass** jeder Flügel der Rinne (5) bezüglich der Grundplatte (2) gleitend montiert ist.

8. Vorrichtung zum Verlegen und Befestigen nach Anspruch 1, **dadurch gekennzeichnet, dass** die Flügel jeder der Rinnen (5) an ihrem Ende mit Rasten (32), Vorsprüngen oder ähnlichem versehen sind, die mit komplementären Vorsprüngen (33a) zusammenwirken können, die an den Enden von Clips (33) zur Verriegelung des Inhalts der Rinne ausgebildet sind.

9. Vorrichtung zum Verlegen und Befestigen nach Anspruch 1, **dadurch gekennzeichnet, dass** das Zusatzprofil (13) einen U-förmigen Querschnitt hat, wobei die Flügel (13b) des U elastisch verformbar und mit Mitteln (14) zum Einrasten auf den äußeren Flügeln der beiden Randrinnen (5, 5a) einer Verlegehalterung versehen sind.

10. Vorrichtung zum Verlegen und Befestigen nach Anspruch 1, **dadurch gekennzeichnet, dass** das Zusatzprofil (13d) einen L-förmigen Querschnitt hat und auf seinem Mittelteil (13e) vorstehend eine elastisch verformbare Längsrippe (35) aufweist, die wie sein Flügel (13f) mit einer Einklinkraste (35a) versehen ist, die mit einem der Flügel einer Rinne (5s) für eine Rohrleitung zusammenwirken kann, wobei der andere Flügel der Rinne mit der Raste (14) des Flügels (13f) des Profilteils (13d) zusammenwirkt.

11. Vorrichtung zum Verlegen und Befestigen nach Anspruch 1, **dadurch gekennzeichnet, dass** das Zusatzprofil B an seiner Rückseite vorstehend Längsrinnen (36) mit einem Querschnitt in Form eines offenen C aufweist, die je in der Lage sind, einen Leiter zur Übertragung von elektrischen oder optischen Signalen aufzunehmen und zu halten, und sich in den Zwischenraum E zwischen den Rohrleitungsrinnen (5, 5a) einfügen.

12. Vorrichtung zum Verlegen und Befestigen nach Anspruch 1, **dadurch gekennzeichnet, dass** mindestens einer der Flügel (44) des Zusatzprofils (13k) durch eine Längstrennwand (45) verdoppelt wird, mit der er einen offenen Aufnahmekanal (46) für mindestens einen isolierten Übertragungsleiter von elektrischen oder optischen Signalen bildet.

13. Vorrichtung zum Verlegen und Befestigen nach Anspruch 1, **dadurch gekennzeichnet, dass** das Zusatzprofil (13k) in seinem Mittelteil Zonen aufweist, die als Reserve für die Positionierung oder Befestigung eines elektrischen Elements, wie zum Beispiel eines Schalters, von Abdeckungen aus aufplatzbarem Material (43) verschlossen sind.

14. Vorrichtung zum Verlegen und Befestigen nach Anspruch 1, **dadurch gekennzeichnet, dass** die Grundplatte (2) jeder Verlegehalterung (T, T1, T2) von Löchern (29, 56) für den Durchlass von Schächten oder Dübeln (30) durchquert wird, die mit Schrauben zur endgültigen Befestigung zusammenwirken.

15. Vorrichtung zum Verlegen und Befestigen nach Anspruch 1, **dadurch gekennzeichnet, dass** die Befestigungsgrundplatte (2) jeder Verlegehalterung (T, T1, T2) von zwei seitlichen Randstreifen (52) zur vorübergehenden Befestigung an den lotrechten Wänden eines Winkels zwischen zwei Wänden umrandet wird, und dass jeder dieser Randstreifen (52) auf seiner Rückseite eine Haftschicht (55) aufweist, die von einer abschälbaren Folie geschützt wird.

16. Vorrichtung zum Verlegen und Befestigen nach Anspruch 1, **dadurch gekennzeichnet, dass** das Profilteil (A) eine Trennwand (59) parallel zur Grundplatte (2) aufweist, in der Rückhaltemittel für ein Befestigunqselement einer Rohrleitung (6) ausgebildet sind.

17. Vorrichtung zum Verlegen und Befestigen nach Anspruch 16, **dadurch gekennzeichnet, dass** die Befestigungselemente (65) je einen T-förmigen Fuß (66) aufweisen, der sich in ein Langloch einfügt, das in der Wand (63) ausgebildet ist.

## Claims

1. Laying and fixing system for pipes of various circuits, comprising a plastic profile A with a mounting plate (2) whose back is supplied with an adhesive fixing means (3) for fixing it to a wall and whose front is provided with elastically deformable wings in pairs defining a longitudinal cavity (5) for receiving and retaining an elongate body, **characterized in that** the deformable wings are those of longitudinal open C-section gutters (5, 5a) projecting from the front of the mounting plate (2) and separated transversely from each other by a gap E, at least one of the wings of each gutter (5, 5a) being moulded integrally with the mounting plate (2) and made of the same semirigid material, while, on the one hand, the said mounting plate (2) of the profile is divided into sub-lengths by breakable or precut transverse lines (11) coinciding with transverse slots (21) formed through the gutters (b, 5a), in order to form independent ducts (T, T1, T2..) in Lhis profile A and, on the other hand, the system also comprises a plastic finishing profile R which, having fixing means (14) for clipping it onto the gutters (5, 5a), can be cut to length to cover one or more ducts (T, T1, T2) and the associated pipes (6), along a rectilinear part of laid, fixed pipes.

2. Laying and fixing system according to Claim 1, **characterized in that** the openings (16) of the gutters (5a) of the profile A are open laterally towards the same longitudinal edge of the mounting plate (2).

3. Laying and fixing system according to Claim 1, **characterized in that** it comprises open C-shaped liners (23), each capable of being inserted in one of the gutters (5, 5a) to reduce its inside diameter for accommodating a pipe (6).

4. Laying and fixing system according to Claim 1, **characterized in that** it comprises H-shaped liners (23), each capable of being inserted in one of the gutters (5, 5a) to reduce its accommodating diameter and retain an elongate body of smaller cross section, such as an insulated conductor for the transmission of electrical or optical signals.

5. Laying and fixing system according to Claim 1, **characterized in that** at least one longitudinal gutter (12), of smaller internal diametrical dimension than the pipe gutters (5, 5a), projects from the mounting plate into the gap (E) between two pipe gutters (5, 5a) to accommodate and retain an insulated conductor of a circuit for the transmission of electrical or optical signals.

6. Laying and fixing system according to Claim 1, **characterized in that** in each pipe gutter (5, 5a), the wing (5m) that is not moulded integrally with the mounting plate (2) is connected to a lug (25) that is parallel to the mounting plate (2), able to slide relative to it, and is engaged by means (26, 28) that fasten it to the said mounting plate, in any of its positions near or far from the other wing (5f).

7. Laying and fixing system according to Claim 6, **characterized in that** each wing of the gutter (5) is able to slide relative to the mounting plate (2).

8. Laying and fixing system according to Claim 1, **characterized in that** the wings of each of the gutters (5) are provided, on their edges, with spurs (32), teeth or equivalent means able to engage with complementary spurs (33a) on the edges of clips (33) for securing the contents of the gutter.

9. Laying and fixing system according to Claim 1, **characterized in that** the finishing profile (13) has a U-shaped cross section whose wings (13b) are elastically deformable and are provided with means (14) for clipping them onto the outer wings of the two outermost gutters (5, 5a) of a duct.

10. Laying and fixing system according to Claim 1, **characterized in that** the finishing profile (13d) has an L-shaped cross section and comprises, projecting from its web (13e) an elastically deformable longitudinal rib (35) provided, like its wing (13f), with a clip-fastening spur (35a) able to engage with one of the wings of a pipe gutter (5s), the other wing of which gutter engages with the spur (14) of the wing (13f) of the profile (13d).

11. Laying and fixing device according to Claim 1, **characterized in that** the finishing profile B comprises, projecting from its back, various longitudinal open C-section gutters (36), each able to receive and retain a conductor, for the transmission of electrical or optical signals, that fits in the gap E between the pipe gutters (5, 5a).

12. Laying and fixing system according to Claim 1, **characterized in that** a longitudinal partition (45) runs alongside at least one of the wings (44) of the finishing profile (13k), with which it forms an open channel (46) receiving at least one insulated conductor, for the transmission of electrical or optical signals.

13. Laying and fixing system according to Claim 1, **characterized in that** the web of the finishing profile (13k) comprises zones that are reserved for positioning or fixing an electrical device, such as a switch, and that are closed by thin covers of breakable material (43).

14. Laying and fixing system according to Claim 1, **characterized in that** the mounting plate (2) of each duct (T, T1, T2) is pierced by holes (29, 56) for the passage of sleeves or wall plugs (30) working in conjunction with final fixing screws.

15. Laying and fixing system according to Claim 1, **characterized in that** the fixing mounting plate (2) of each duct (T, T1, T2) is bordered by two lateral flaps (52) for fixing temporarily to the perpendicular walls of a corner between two walls, and each of these flaps (52) comprises on its back an adhesive layer (55) protected by a peel-off film.

16. Laying and fixing system according to Claim 1, **characterized in that** the profile (A) has a partition (59) parallel to the mounting plate (2) containing pipe (6) fixing member retention means.

17. Laying and fixing device according to Claim 16, **characterized in that** the fixing members (65) each have a T-shaped foot (66) engaging in an oblong hole formed in the wall (63).
